Europäisches Patentamt

**(19)** European Patent Office

Office européen des brevets

**(11)** Publication number : **0 588 522 A2**

**(12)** # EUROPEAN PATENT APPLICATION

**(21)** Application number : **93306809.0**

**(22)** Date of filing : **27.08.93**

**(51)** Int. Cl.$^5$ : **G06F 15/72**

**(30)** Priority : **31.08.92 JP 230902/92**

**(43)** Date of publication of application :
**23.03.94 Bulletin 94/12**

**(84)** Designated Contracting States :
**DE FR GB NL**

**(71)** Applicant : **MATSUSHITA ELECTRIC
INDUSTRIAL CO., LTD.
1006, Kadoma
Kadoma-shi, Osaka-fu 571 (JP)**

**(72)** Inventor : **Kobayashi, Tadashi
1-14-18, Asahigaoka
Ootsu-shi, Shiga 520 (JP)**

Inventor : **Nishimura, Akio
1-7-15-209, shinkanaoka-cho
Sakai-shi, Osaka 591 (JP)**
Inventor : **Maenobu, Kiyoshi
3-11-3, Konakajima
Amagasaki-shi, Hyogo 661 (JP)**
Inventor : **Nishizawa, Teiji
18-30, Nishi-Asahigaoka
Ikoma-shi, Nara 630-02 (JP)**
Inventor : **Hirai, Makoto
2-21-17-502, Saidera
Suita-shi, Osaka 565 (JP)**

**(74)** Representative : **Cummings, Sean Patrick et al
David Keltie Associates Audrey House Ely
Place
London EC1N 6SN (GB)**

**(54) Alpha blending circuit used in image composition.**

**(57)** The present invention discloses an $\alpha$ blending circuit which composites image data X and image data Y with a composition factor $\alpha$. It comprises an operating unit for finding $\alpha X + \overline{\alpha} Y$ for each bit of the image data X and Y, and an adder for aligning operation results with same bit-weight from the operating unit to add them together to form a sum total thereof, and the adder can also add each bit of the image data Y multiplied by a weight of LSB of the composition factor $\alpha$ if desired so.

EP 0 588 522 A2

Jouve, 18, rue Saint-Denis, 75001 PARIS

## BACKGROUND OF THE INVENTION

### (1) Field of the Invention

The present invention relates to an image composition apparatus which carries out an $\alpha$ blending operation for digital image data to composite two images.

### (2) Description of the Related Art

In general, digital image data are effectively used in the field of image processing, image generation, and special effects on images where advanced techniques are required. Particularly, they are widely used in the field of image composition where two images are composited into one in a specific ratio. In the image composition, a so-called $\alpha$ blending operation expressed by Equation 1 as below is applied to every pixel in the two images.

$$P = \alpha X + (1 - \alpha)Y \quad \text{[Equation 1]}$$

where X is the pixel data of one of the images and Y is those of the other, $\alpha$ is a composition factor($0 \leqq \alpha < 1$), and P is composite pixel data.

In case of a monochrome image, the pixel data represent the brightness of each pixel, and in case of a color image, they represent the brightness of RGB(Red, Green and Blue), or luminance Y and color differences B-Y and R-Y.

Given that the image data consist of myriads of pixels, the image composition apparatus must repeat the $\alpha$ blending operation for a great number of times. For this reason, it is desireable to use a down-sized, high-speed $\alpha$ blending circuit in the image composition apparatus.

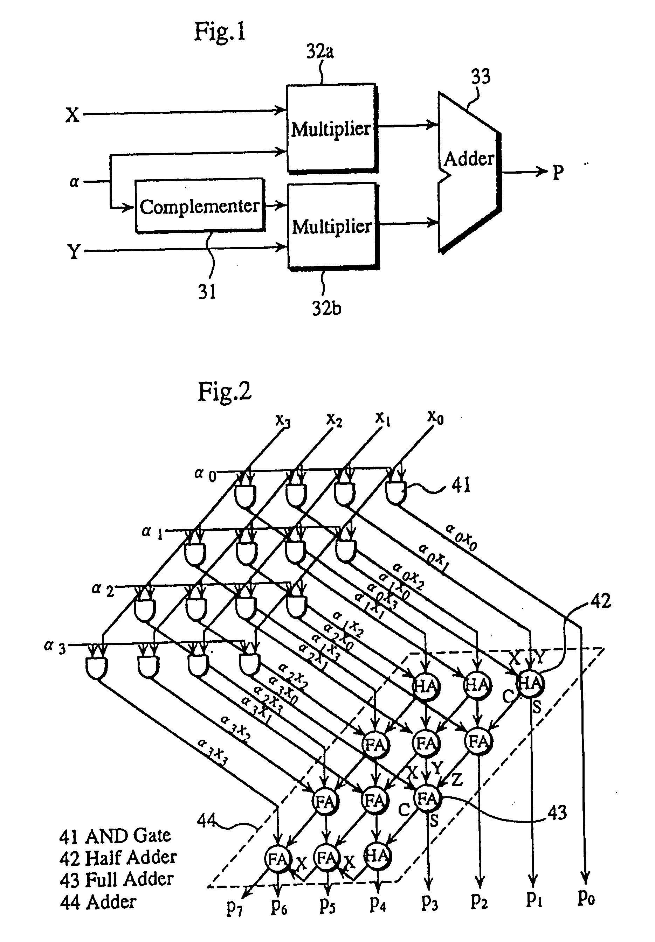

Shown in Fig. 1 is a typical construction of a conventional $\alpha$ blending circuit. It comprises a complementer 31, two 4-bit multipliers 32a and 32b, and an adder 33.

The complementer 31 calculates a complement of the composition factor $\alpha$, i.e. (1 - $\alpha$), the multiplier 32a multiplies the composition factor $\alpha$ by the pixel data X to find a product $\alpha X$, the multiplier 32b multiplies the complement (1 - $\alpha$) by the pixel data Y to find a product (1 - $\alpha$)Y. The adder 33 adds the two products from the multipliers 32a and 32b to output the result as the composite pixel data P.

The multipliers 32a and 32b are of the same construction. Several types of multipliers are available, but an array multiplier with a combinational circuit is most popular in the field of the image processing. Because not only it operates at a high speed, but also it can be easily incorporated into an integrated circuit.

An example of the multipliers 32a and 32b is shown in Fig. 2. Each comprises sixteen AND gates 41, and four half-adders 42 and eight full-adders 43 which constitute an adder 44 denoted by a dotted line encircling these adders.

As an example, the operation of the multipliers 32a will be explained. Let a multiplicand X be a 4-bit integer, a multiplier $\alpha$ be a 4-bit fixed-point number, and a product $\alpha X$ be an 8-bit fixed-point number. Also, let their orders proceed from high to low; $(x_3, x_2, x_1, x_0)$, $(\alpha_3, \alpha_2, \alpha_1, \alpha_0)$, and $(p_7, p_6, p_5, p_4, p_3, p_2, p_1, p_0)$. Then, X, $\alpha$, and $\alpha X$ are respectively expressed as :

$$X = x_3 2^3 + x_2 2^2 + x_1 2^1 + X_0 2^0$$
$$\alpha = \alpha_3 2^{-1} + \alpha_2 2^{-2} + \alpha_1 2^{-3} + \alpha_0 2^{-4}$$

where the decimal point is fixed at the left of $\alpha_3$

$$\alpha X = p_7 2^3 + p_6 2^2 + p_5 2^1 + p_4 2^0 + p_3 2^{-1} + p_2 2^{-2} + p_1 2^{-3} + p_0 2^{-4}$$

Given that the multiplication of a and X can be converted into addition of partial products(a product of each bit of X and $\alpha$), they are converted into :

$$X = \sum_{i=0}^{3} x_i 2^i$$

$$\alpha = \sum_{j=0}^{3} \alpha_j 2^{j-4}$$

$$\alpha X = \left( \sum_{i=0}^{3} \alpha_i 2^i \right) \left( \sum_{j=0}^{3} x_j 2^{j-4} \right)$$

$$= \sum_{i=0}^{3} \sum_{j=0}^{3} (\alpha_i x_j) 2^{i+j-4}$$

$$= \sum_{k=0}^{7} p_k 2^{k-4} \qquad \ldots\ldots[\text{Equation 2}]$$

The partial products with same bit-weight are aligned in a columnwise fashion as shown in Equation 3.

$$
\begin{array}{cccccccc}
 & & & & \alpha_3 x_0 & \alpha_2 x_0 & \alpha_1 x_0 & \alpha_0 x_0 \\
 & & & \alpha_3 x_1 & \alpha_2 x_1 & \alpha_1 x_1 & \alpha_0 x_1 & \\
 & & \alpha_3 x_2 & \alpha_2 x_2 & \alpha_1 x_2 & \alpha_0 x_2 & & \\
+ & \alpha_3 x_3 & \alpha_2 x_3 & \alpha_1 x_3 & \alpha_0 x_3 & & & \\
\hline
p_7 & p_6 & p_5 & p_4 & p_3 & p_2 & p_1 & p_0
\end{array}
$$

$$\ldots\ldots[\text{Equation 3}]$$

Further, each column is added at the adder 44 by the half-adders 42 and full-adders 43, which have respective logical equations, Equation 4 and Equation 5:

$$C = XY$$

$$S = X\overline{Y} + \overline{X}Y \qquad \ldots\ldots[\text{Equation 4}]$$

where X and Y are 1-bit inputs to be added, S is a 1-bit sum, and C is a carry.

$$C = XY + YZ + ZX$$

$$S = XYZ + X\overline{Y}\overline{Z} + \overline{X}Y\overline{Z} + \overline{X}\overline{Y}Z \qquad \ldots\ldots[\text{Equation 5}]$$

where Z is a carry from a lower order half/full adder.

Consequently, the adding results $p_7$ - $p_0$ forms the product $\alpha X$.

In practice, let $\alpha = 0.100$, X = 1010, then the product $\alpha X$ is found as follows:

EP 0 588 522 A2

$$
\begin{array}{rcr}
\alpha & = & 0.100 \\
X & = & \underline{1010} \\
& & 0.000 \\
& & 01.00 \\
& & 000.0 \\
& & \underline{0100} \\
\alpha X & = & 00101.000
\end{array}
$$

The other multiplier 32b operates synchronously to form the product $(1 - \alpha)Y$ in the same manner, and the products $\alpha X$ and $(1 - \alpha)Y$ are outputted to the adder 33 which in turn adds these two products, and outputs the result as the composite pixel data P.

The reason why this type of circuit can operates at a high speed is because the partial products are generated in parallel: since they are ANDs of $\alpha$ and X per bit in effect, they can be generated in parallel if AND gates are provided in a matching number of the product bits. It is for this reason that sixteen AND gates 41 are used in the foregoing example which multiplies two 4-bit numbers.

However, because this type of circuit basically comprises the complementer, two multipliers, and the adder, the scale thereof correspondingly and undesirably expands.

SUMMARY OF THE INVENTION

Accordingly, the present invention has an object to provide a down-sized $\alpha$ blending circuit.

The above object is fulfilled by an $\alpha$ blending circuit which composites image data X and image data Y with a composition factor $\alpha$. It comprises an operating unit for finding $\alpha X + \overline{\alpha}Y(\overline{\phantom{x}}$ denotes a logical NOT of each bit) for each bit of the image data X and Y, and an adder for aligning operation results with same bit-weight from the operating unit to add them together to form a sum total thereof.

The operating unit may include a plurality of multiplexers, and a bit of the image data X, a corresponding bit of the image data Y are inputted thereto while a bit of the composition factor $\alpha$ is inputted thereto as a selection signal.

The operating unit may include mn multiplexers($MPX_{11} - MPX_{mn}$) for an m-bit composition factor $\alpha(\alpha_1, \alpha_2, ..., \alpha_m)$ as the selection signal, an n-bit image data $X(X_1, X_2, ..., X_n)$, and an n-bit image data $Y(Y_1, Y_2, ..., Y_n)$, and bits $X_j$ and $Y_j$ may be inputted into a multiplexer $MPX_{ij}$ and selectively outputted therefrom under the control of the selection signal $\alpha_i$, where $1\leq i\leq m$, $1\leq j\leq n$.

According to the above construction, the $\alpha$ blending circuit can exploit the fact that the image data Y multiplied by LSB(least significant bit) of the composition factor $\alpha$ is negligible, and thus it calculates $\alpha X + \overline{\alpha}Y$ instead of $\alpha X + (1 - \alpha)Y$, making it possible to down-size the scale thereof. In addition, given that the conventional two multipliers are replaced with a group of multiplexers in effect, the scale thereof can be decreased by half.

The above object is also fulfilled by an $\alpha$ blending circuit which composites image data X and image data Y with a composition factor $\alpha$. It comprises an operating unit for finding $\alpha X + \alpha\overline{Y}$ for each bit of the image data X and Y, and an adder for aligning operation results with same bit-weight from the operating unit to add them together to form a sum total thereof, wherein the adder further adds each bit of the image data Y multiplied by a weight of LSB of the composition factor $\alpha$.

The operating unit may include a plurality of multiplexers, and a bit of the image data X, a corresponding bit of the image data Y are inputted thereto while a bit of the composition factor a is inputted thereto as a selection signal.

The operating unit may include mn multiplexers($MPX_{11} - MPX_{mn}$) for an m-bit composition factor $\alpha(\alpha_1, \alpha_2, ..., \alpha_m)$ as the selection signal, an n-bit image data $X(X_1, X_2, ..., X_n)$, and an n-bit image data $Y(Y_1, Y_2, ..., Y_n)$, and bits $X_j$ and $Y_j$ may be inputted into a multiplexer $MPX_{ij}$ and selectively outputted therefrom under the control of the selection signal $\alpha_i$, where $1\leq i\leq m$, $1\leq j\leq n$.

According to the above construction, the $\alpha$ blending circuit calculates the image data Y multiplied by LSB of the composition factor $\alpha$ invariably, thus, it can carry out the $\alpha$ blending operation exactly to find the accurate sum total, or namely the composite pixel data.

4

BRIEF DESCRIPTION OF THE DRAWINGS

These and other objects, advantages and features of the invention will become apparent from the following description thereof taken in conjugation with the accompanying drawings which illustrate specific embodiments of the invention. In the drawings:

Fig. 1 is a block diagram of the conventional $\alpha$ blending circuit;

Fig. 2 is a view showing the construction of the multiplier used in the conventional $\alpha$ blending circuit;

Fig. 3 is a block diagram of the $\alpha$ blending circuit in accordance with the first embodiment of the present invention;

Fig. 4 is a view depicting the construction of the $\alpha$ blending circuit in accordance with the first embodiment of the present invention; and

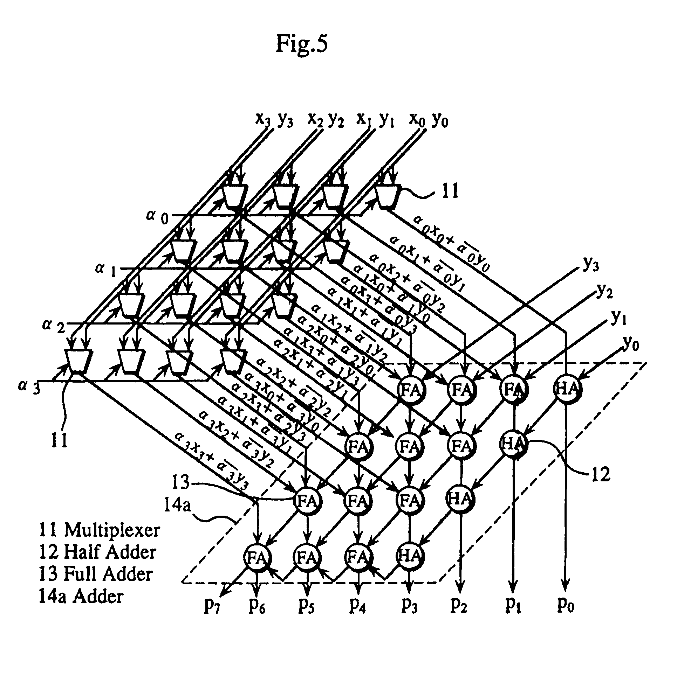

Fig. 5 is a view depicting the construction of the $\alpha$ blending circuit in accordance with the second embodiment of the present invention.

DESCRIPTION OF THE PREFERRED EMBODIMENT

(First Embodiment)

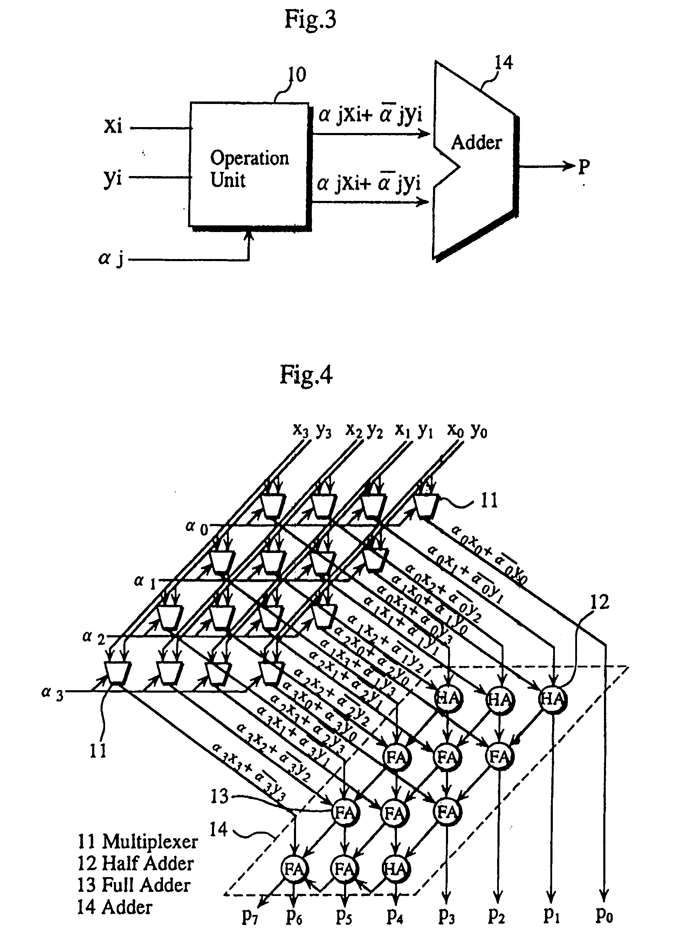

The $\alpha$ blending circuit in accordance with the first embodiment is shown in Fig. 3. In the drawing, numeral 10 is an operation unit which is replaced with the conventional complementer 31 and multipliers 32a and 32b, and it calculates approximate values to the products $\alpha X$ and $(1 - \alpha)Y$. Numeral 14 is an adder which is identical with the conventional adder 33 both in construction and operation.

The construction of the operation unit 10 is detailed in Fig. 4. It comprises sixteen multiplexers 11, and the adder 14 including four half-adders 12 and eight full-adders 13. Each multiplexer 11 has two inputs and one output terminals(2-to-1 type). It receives bits $x_j$ and $y_j$ which respectively correspond to the pixel data of two images to be composited, and one of bits of the composition factor a as a selection signal $\alpha_i$: it outputs $x_j$ when the selection signal $\alpha_i$ has a logical 1, while outputting $y_j$ when a logical 0. Let X and Y be 4-bit integers, and $\alpha$ be a 4-bit fixed-point number$(i,j = 0 - 3)$, then they are respectively expressed as

$$X = x_3 2^3 + x_2 2^2 + x_1 2^1 + x_0 2^0$$
$$Y = y_3 2^3 + y_2 2^2 + y_1 2^1 + y_0 2^0$$
$$\alpha = \alpha_3 2^{-1} + \alpha_2 2^{-2} + \alpha_1 2^{-3} + \alpha_0 2^{-4}$$

where the decimal point is fixed at the left of $\alpha_3$.

Like in the conventional adder 33, the half-adders 12 and full-adders 13 carries out addition using Equation 4 and Equation 5, respectively in the adder 14. Therefore, the output of the 8-bit fixed-point number, or namely the composite pixel data P, is expressed as

$$P = p_7 2^3 + p_6 2^2 + p_5 2^1 + p_4 2^0 + p_3 2^{-1} + p_2 2^{-2} + p_1 2^{-3} + p_0 2^{-4}$$

where the decimal point is fixed between $p_4$ and $p_3$.

In practice, the $\alpha$ blending circuit operates as is explained in the following.

When the composition factor a has four bits like in this embodiment, the complement thereof can be converted into :

$$1 - \alpha = \overline{\alpha} + 2^{-4} \quad \text{[Equation 6]}$$

Then, Equation 1 can be converted into :

$$P = \alpha X + (1-\alpha)Y$$
$$= \alpha X + (\overline{\alpha} + 2^{-4})Y$$
$$= \alpha X + \overline{\alpha}Y + Y 2^{-4} \quad \ldots\ldots\text{[Equation 7]}$$

As the composition factor $\alpha$ has a sufficient number of bits, the third term in the right side in Equation 7$(Y 2^{-4})$ is so small that it is negligible in relation with the first and second terms, and thus can be omitted. Accordingly, Equation 7 can be rewritten as:

$$P = \alpha X + \overline{\alpha} Y$$

$$= \left( \sum_{i=0}^{3} \alpha_i 2^i \right) \left( \sum_{j=0}^{3} x_j 2^{j-4} \right) + \left( \sum_{i=0}^{3} \overline{\alpha}_i 2^i \right) \left( \sum_{j=0}^{3} y_j 2^{j-4} \right)$$

$$= \sum_{i=0}^{3} \sum_{j=0}^{3} (\alpha_i x_j) 2^{i+j-4} + \sum_{i=0}^{3} \sum_{j=0}^{3} (\overline{\alpha}_i y_j) 2^{i+j-4}$$

$$= \sum_{i=0}^{3} \sum_{j=0}^{3} (\alpha_i x_j + \overline{\alpha}_i y_j) 2^{i+j-4}$$

$$= \sum_{k=0}^{7} p_k 2^{k-4} \qquad \dots\dots[\text{Equation 8}]$$

The partial products are outputted from the respective multiplexers 11, and the ones with the same bit-weight are aligned in the columnwise fashion to be added together by the adder 14.

$$
\begin{array}{ccccc}
 & & & & \alpha_3 x_0 + \overline{\alpha_3 y_0} \\
 & & & \alpha_3 x_1 + \overline{\alpha_3 y_1} & \alpha_2 x_1 + \overline{\alpha_2 y_1} \\
 & & \alpha_3 x_2 + \overline{\alpha_3 y_2} & \alpha_2 x_2 + \overline{\alpha_2 y_2} & \alpha_1 x_2 + \overline{\alpha_1 y_2} \\
+ & \alpha_3 x_3 + \overline{\alpha_3 y_3} & \alpha_2 x_3 + \overline{\alpha_2 y_3} & \alpha_1 x_3 + \overline{\alpha_1 y_3} & \alpha_0 x_3 + \overline{\alpha_0 y_3} \\
\hline
p_7 & p_6 & p_5 & p_4 & p_3
\end{array}
$$ *****

$$
\begin{array}{ccc}
\alpha_2 x_0 + \overline{\alpha_2 y_0} & \alpha_1 x_0 + \overline{\alpha_1 y_0} & \alpha_0 x_0 + \overline{\alpha_0 y_0} \\
\alpha_1 x_1 + \overline{\alpha_1 y_1} & \alpha_0 x_1 + \overline{\alpha_0 y_1} & \\
\alpha_0 x_2 + \overline{\alpha_0 y_2} & &
\end{array}
$$

*****
$$
\begin{array}{ccc}
\hline
p_2 & p_1 & p_0
\end{array}
$$

$$\dots\dots[\text{Equation 9}]$$

The adder 14 outputs the adding results $p_7$ - $p_0$ as the composite pixel data P. Although it is the approximate value as the third term of the right side($Y2^{-4}$) is excluded from the addition, it does not cause any adverse effects on the final composite image.

By replacing the two multipliers with a group of the multiplexers, the scale of the $\alpha$ blending circuit can be reduced by half or more compared with the conventional ones.

(Second Embodiment)

The $\alpha$ blending circuit in accordance with the second embodiment is shown in Fig. 4. It is of the same construction as the one in the first embodiment, except that the adder 14 is replaced with an adder 14a. Unlike the former, the latter is designed to include the third term in the right side($2^{-4}$Y) in the addition, and it comprises four half-adders 12 and twelve full-adders 13.

Upon the receipt of the partial products from the sixteen multiplexers 11, it aligns the ones with the same bit-weight in the columnwise fashion and adds them together while adding the third term of the right side($2^{-4}$Y) as well to form the composite pixel data P.

In practice, the $\alpha$ blending circuit operates as is explained in the following.

In this embodiment, Equation 7 can be converted into:

$$P = \alpha X + \overline{\alpha} Y + Y2^{-4}$$

$$= (\sum_{i=0}^{3} \alpha_i 2^i)(\sum_{j=0}^{3} x_j 2^{j-4}) + (\sum_{i=0}^{3} \overline{\alpha}_i 2^i)(\sum_{j=0}^{3} y_j 2^{j-4}) + \sum_{j=0}^{3} y_j 2^j 2^{-4}$$

$$= \sum_{i=0}^{3} \sum_{j=0}^{3} (\alpha_i x_j) 2^{i+j-4} + \sum_{i=0}^{3} \sum_{j=0}^{3} (\overline{\alpha_i y_j}) 2^{i+j-4} + \sum_{j=0}^{3} y_j 2^{j-4}$$

$$= \sum_{i=0}^{3} \sum_{j=0}^{3} (\alpha_i x_j + \overline{\alpha}_i y_j) 2^{i+j-4} + \sum_{j=0}^{3} y_j 2^{j-4}$$

$$= \sum_{k=0}^{7} p_k 2^{k-4} + \sum_{j=0}^{3} y_j 2^{j-4} \qquad \dots \text{[Equation 10]}$$

Like in the first embodiment, the partial products with the same bit-weight aligned in the columnwise fashion are added together to form the composite pixel data P.

|  |  |  |  | $y_3$ |  |
|---|---|---|---|---|---|
|  |  |  |  | $\alpha_3 x_0 + \overline{\alpha_3 y_0}$ |  |
|  |  |  | $\alpha_3 x_1 + \overline{\alpha_3 y_1}$ | $\alpha_2 x_1 + \overline{\alpha_2 y_1}$ |  |
|  |  | $\alpha_3 x_2 + \overline{\alpha_3 y_2}$ | $\alpha_2 x_2 + \overline{\alpha_2 y_2}$ | $\alpha_1 x_2 + \overline{\alpha_1 y_2}$ |  |
| + | $\alpha_3 x_3 + \overline{\alpha_3 y_3}$ | $\alpha_2 x_3 + \overline{\alpha_2 y_3}$ | $\alpha_1 x_3 + \overline{\alpha_1 y_3}$ | $\alpha_0 x_3 + \overline{\alpha_0 y_3}$ | \*\*\*\*\* |
| $p_7$ | $p_6$ | $p_5$ | $p_4$ | $p_3$ |  |

|  | $y_2$ |  | $y_1$ |  | $y_0$ |
|---|---|---|---|---|---|
| $\alpha_2 x_0 + \overline{\alpha_2 y_0}$ |  | $\alpha_1 x_0 + \overline{\alpha_1 y_0}$ |  | $\alpha_0 x_0 + \overline{\alpha_0 y_0}$ |  |
| $\alpha_1 x_1 + \overline{\alpha_1 y_1}$ |  | $\alpha_0 x_1 + \overline{\alpha_0 y_1}$ |  |  |  |
| $\alpha_0 x_2 + \overline{\alpha_0 y_2}$ |  |  |  |  |  |

\*\*\*\*\*

|  | $p_2$ |  | $p_1$ |  | $p_0$ |
|---|---|---|---|---|---|

$$\dots \text{[Equation 11]}$$

Because the adder 14a includes the third term of the right side($Y2^{-4}$) in the addition invariably, an accurate value instead of an approximate one can be found in this embodiment.

Although 8-bit adders can be additionally attached in the adder 14 in the first embodiment to include the third term of the right side($Y2^{-4}$), eight of them are required per bit alone. As a result, the eight adders increase eight more stages, and hence the processing time is delayed for corresponding latency, while expanding the scale of the circuit undesirably. To minimize such latency, another type of adder such as a carry look-ahead adder can be used, but it also expands the scale thereof after all.

In contrast, the adder 14a of the second embodiment includes only four additional half-adders 12 which increase only one stage. Thus, the latency can be minimized compared with the foregoing, while making it possible to construct a down-sized circuit.

Although 4-bit digital operands are used as X, Y, and $\alpha$, operands of any length can be used in the present invention; for the number of the multiplexers 11 and full-adders 13 can be varied accordingly. For example, if X and Y are 5-bit digital operands, and $\alpha$ are 4-bit digital number, then both the multiplexers 11 and full-adders 13 are increased by four.

Although the present invention has been fully described by way of example with reference to the accompanying drawings, it is to be noted that various changes and modification will be apparent to those skilled in the art. Therefore, unless otherwise such changes and modifications depart from the scope of the present invention, they should be construed as being included therein.

## Claims

1.  An $\alpha$ blending circuit which composites image data X and image data Y with a composition factor $\alpha$, comprising:

    operating means for finding $\alpha X + \overline{\alpha} Y$ for each bit of the image data X and Y; and

    adding means for aligning operation results with same bit-weight from said operating means to add them together to form a sum total thereof.

2.  An $\alpha$ blending circuit of Claim 1, wherein said operating means includes a plurality of multiplexers, and a bit of the image data X, a corresponding bit of the image data Y are inputted thereto while a bit of the composition factor a is inputted thereto as a selection signal.

3.  An $\alpha$ blending circuit of Claim 2, wherein:

    said operating means includes mn multiplexers($MPX_{11}$ - $MPX_{mn}$) for an m-bit composition factor $\alpha(\alpha_1, \alpha_2, ..., \alpha_m)$ as the selection signal, an n-bit image data $X(X_1, X_2, ..., X_n)$, and an n-bit image data $Y(Y_1, Y_2, ..., Y_n)$; and

    bits $X_j$ and $Y_j$ are inputted into a multiplexer $MPX_{ij}$ and selectively outputted therefrom under a control of the selection signal $\alpha_i$, where $1\leq i\leq m$, $1\leq j\leq n$.

4.  An $\alpha$ blending circuit of Claim 1, wherein said adding means further adds each bit of the image data Y multiplied by a weight of LSB of the composition factor $\alpha$.

5.  An $\alpha$ blending circuit of Claim 4, wherein said operating means includes a plurality of multiplexers, and a bit of the image data X, a corresponding bit of the image data Y are inputted thereto while a bit of the composition factor $\alpha$ is inputted thereto as a selection signal.

6.  An $\alpha$ blending circuit of Claim 5, wherein:

    said operating means includes mn multiplexers($MPX_{11}$ - $MPX_{mn}$) for an m-bit composition factor $\alpha(\alpha_1, \alpha_2, ..., \alpha_m)$ as the selection signal, an n-bit image data $X(X_1, X_2, ..., X_n)$, and an n-bit image data $Y(Y_1, Y_2, ..., Y_n)$; and

    bits $X_j$ and $Y_j$ are inputted into a multiplexer $MPX_{ij}$ and selectively outputted therefrom under a control of the selection signal $\alpha_i$, where $1\leq i\leq m$, $1\leq j\leq n$.

Fig.1

Fig.2

41 AND Gate
42 Half Adder
43 Full Adder
44 Adder

Fig.3

Xi

yi

Operation Unit

$\alpha$ j

10

$\alpha$ jXi+ $\overline{\alpha}$ jyi

$\alpha$ jXi+ $\overline{\alpha}$ jyi

14

Adder

P

Fig.4

$x_3$ $y_3$   $x_2$ $y_2$   $x_1$ $y_1$   $x_0$ $y_0$

11

$\alpha_0$

$\alpha_1$

$\alpha_2$

$\alpha_3$

11

$\alpha_0 x_0 + \overline{\alpha_0} y_0$

$\alpha_0 x_1 + \overline{\alpha_0} y_1$

$\alpha_0 x_2 + \overline{\alpha_0} y_2$

$\alpha_1 x_0 + \overline{\alpha_1} y_0$

$\alpha_1 x_1 + \overline{\alpha_0} y_3$

$\alpha_1 x_2 + \overline{\alpha_1} y_1$

$\alpha_2 x_0 + \overline{\alpha_1} y_2$

$\alpha_2 x_1 + \overline{\alpha_2} y_0$

$\alpha_2 x_2 + \overline{\alpha_1} y_3$

$\alpha_3 x_0 + \overline{\alpha_2} y_1$

$\alpha_2 x_3 + \overline{\alpha_3} y_0$

$\alpha_3 x_1 + \overline{\alpha_2} y_2$

$\alpha_3 x_2 + \overline{\alpha_3} y_1$

$\alpha_3 x_3 + \overline{\alpha_3} y_2$

$\alpha_3 x_3 + \overline{\alpha_3} y_3$

12

HA   HA   HA

FA   FA   FA

13

FA   FA   FA

14

FA   FA   HA

11 Multiplexer
12 Half Adder
13 Full Adder
14 Adder

$p_7$   $p_6$   $p_5$   $p_4$   $p_3$   $p_2$   $p_1$   $p_0$

# Fig.5

11 Multiplexer
12 Half Adder
13 Full Adder
14a Adder